# EUROPÄISCHE PATENTSCHRIFT

(11) **EP 1 698 435 B1**
(45) Veröffentlichungstag und Bekanntmachung des Hinweises auf die Patenterteilung: **28.04.2010**
(21) Anmeldenummer: 06002705.9
(22) Anmeldetag: 10.02.2006
(51) Int. Cl.: B25B 13/46, B25B 23/00

(54) **Handbetätigbares Drehmomentwerkzeug mit ausziehbarem Handgriff**
Manually operable torque producing tool with extensible handle
Outil dynamométrique à application manuelle du couple avec poignée extensible

(30) Priorität: 02.03.2005 DE 202005003572 U; 09.05.2005 DE 202005007533 U
(43) Veröffentlichungstag der Anmeldung: 06.09.2006
(73) Patentinhaber: Hazet-Werk Hermann Zerver GmbH & Co. KG, D-42857 Remscheid (DE)
(72) Erfinder: Jansen, Thomas, 42287 Wuppertal (DE)
(74) Vertreter: Ksoll, Peter

(56) Entgegenhaltungen:
- DE-A1- 3 928 473
- DE-U1- 8 623 382
- US-A- 3 338 607
- US-A- 4 277 197
- US-A- 4 278 222
- US-A- 4 508 466
- US-A- 5 285 702
- US-A- 6 131 490
- US-B1- 6 182 539

## Beschreibung

Die Erfindung betrifft ein Drehmomentwerkzeug, insbesondere eine Knarre oder einen Drehmomentschlüssel, gemäß den Merkmalen im Oberbegriff von Patentanspruch 1.

Bei Drehmomentwerkzeugen, wie Knarren oder Drehmomentschlüsseln, handelt es sich um handbetriebene Werkzeuge, mit denen ein Drehmoment auf ein Werkstück, in der Regel eine Schraube oder eine Mutter, ausgeübt werden kann. Solche Drehmomentwerkzeuge kommen in vielen technischen Bereichen für die Montage einzelner Elemente oder Baugruppen zur Anwendung.

Drehmomentwerkzeuge werden in verschiedenen Größen, die jeweils einen bestimmten Drehmomentbereich abdecken, und in unterschiedlichen Ausführungen angeboten. Die Größe ist begrenzt durch die Kraft, die ein durchschnittlicher Mensch aufbringen kann und die Hebellänge, bis zu der ein Werkzeug handhabbar bleibt.

Zur Vergrößerung der Einsatzmöglichkeiten und der Handhabbarkeit sind bereits teleskopierbare Drehmomentwerkzeuge vorgeschlagen worden. So sieht die DE 200 09 679 U1 ein Drehmomentwerkzeug in Form eines Schraubenschlüssels vor mit einem hülsenförmigen Handgriff, der auf einem Schaft gleitend teleskopierbar angeordnet ist. Zwischen dem Schaft und dem Handgriff ist eine Einstellvorrichtung angeordnet, durch die der Handgriff auf dem Schaft feststellbar ist. Hierzu weist der Schaft mehrere Ringnuten auf, in denen Sperrkugeln unter dem Einfluss eines Spannrings eingreifen und so der Schaft relativ gegenüber dem Handgriff arretiert werden kann. Diese Ausführungsform ist fertigungstechnisch aufwendig. Auch kann eine Längenverstellung des Schafts nur in Stufen erfolgen. Ein ähnlicher Vorschlag geht aus der US-PS 2,869,410 hervor.

Auch die DE 40 00 650 A1 beschreibt ein teleskopierbares Drehmomentwerkzeug zum Festziehen oder Lösen von Schrauben oder Muttern, bei dem eine Längenverstellung des Schafts in vorgegebenen Stufen möglich ist.

Die US 4 277 197 zeigt ein teleskopierbares Werkzeug und Koppelmittel für ein solches Werkzeug auf. An einem Ende eines Schaftes ist ein Werkzeugkopf angeordnet. Das andere Ende des Schaftes ist in einem Rohrabschnitt mit einem Handgriff teleskopierbar gelagert. Auf dem Schaft ist im Rohrabschnitt ein Klemmring vorgesehen, der längsgeschlitzt und durch einen Spannring festlegbar ist, wodurch der Rohrabschnitt mit dem Schaft verspannt wird.

Aus der US 6 182 539 B1 geht ebenfalls ein teleskopierbares Werkzeug hervor. Im Unterschied zu dem zuvor genannten ist ein den Klemmring umschließender Zwischenring und eine Ausziehsicherung vorgesehen, welche die Verlagerung des Schaftes im Rohrabschnitt begrenzt.

Das teleskopierbare Werkzeug der US 3 338 607 weist an dem im Rohrabschnitt geführten Ende eine Ringnut auf, in der ein Expansionsring angeordnet ist. Der Expansionsring stellt eine Ausziehsicherung dar, die mit einem Anschlag an einer Spannmutter zusammenwirkt.

Die US 5 285 702 A beschreibt ein teleskopierbares Werkzeug bei dem das im Rohrabschnitt geführte Schaftende ein Gewinde aufweist, auf das eine Buchse geschraubt ist. Die Buchse weist umfangsseitig eine Ringnut auf, in die ein O-Ring als Luftabschlussdichtung eingelegt ist.

Aus der US 6 131 490 ist ein Drehmomentwerkzeug mit ausziehbarem Schaft bekannt. Das Drehmomentwerkzeug verfügt über eine Fixiervorrichtung, zur reibschlüssigen Fixierung des ausgezogenen Schaftes, wobei die Reibkraft durch einen exzentrisch drehenden Außenring über einen Einsatz auf den Schaft hergestellt wird.

Die DE 86 23 382 U offenbart eine Klemmeinrichtung für teleskopisch ineinander verschiebbare Rohre. Die Klemmeinrichtung weist dazu eine längsgeschlitzte Hülse auf, die mit einer Überwurfmutter eine reibschlüssige Verbindung zwischen Innenrohr und Außenrohr herstellt.

Der Erfindung liegt ausgehend vom Stand der Technik die Aufgabe zugrunde, ein Drehmomentwerkzeug der gattungsgemäßen Art sowohl konstruktiv als auch für den praktischen Gebrauch zu verbessern, so dass insbesondere auch eine stufenlose Längenverstellung des Schafts möglich ist.

Die Lösung dieser Aufgabe besteht nach der Erfindung in einem Drehmomentwerkzeug gemäß den Merkmalen von Anspruch 1.

Vorteilhafte Ausgestaltungen des Drehmomentwerkzeugs gemäß Anspruch 1 sind Gegenstand der abhängigen Ansprüche 2 bis 11.

Kernpunkt bildet hierbei, dass zur Führung des Schafts im Rohrabschnitt und auch zur Abstützung des Schafts im Rohrabschnitt bei der Betätigung des Drehmomentwerkzeugs am im Rohrabschnitt geführten endseitigen Schaftabschnitt zumindest ein Stützring lageorientiert angeordnet ist. Zur Erleichterung der Montage kann der Stützring längsgeschlitzt sein. Die Lageorientierung des Stützrings wird durch eine Ringnut im Schaft sichergestellt, in der der Stützring angeordnet ist. Auf diese Weise ist der Stützring auf dem Schaft in Längsrichtung unverschiebbar gehalten.

Gemäß Anspruch 1 ist die Verspannung des Schaftes mit dem Rohrabschnitt durch das Zusammenspiel des endseitig am Rohrabschnitt festlegbaren Spannrings und des auf dem Schaft verlagerbaren Klemmrings gewährleistet, wodurch eine stufenlose Längenverstellung des Drehmomentwerkzeugs ermöglicht wird. Der mit einem Längsschlitz versehene Klemmring ist vor dem Ende des Rohrabschnitts des Handgriffs auf dem Schaft verlagerbar angeordnet. Endseitig am Rohrabschnitt ist der Spannring festlegbar. Bei der Festlegung des Spannrings am Rohrabschnitt wird der Klemmring unter dem Einfluss des Spannrings radial mit dem Schaft verspannt und der Schaft relativ gegenüber dem Rohrabschnitt arretiert.

Eine derartige Konstruktion ermöglicht auf konstruktiv einfache und zuverlässig funktionierende Weise eine stufenlose Längenverstellung des Drehmomentwerkzeugs bzw. des Schafts. Zum Verstellen wird der Spannring gelöst. Der Schaft kann dann im Rohrabschnitt des Handwerkzeugs longitudinal verschoben und die gewünschte Länge des Drehmomentwerkzeugs eingestellt werden. Anschließend wird der Spannring festgelegt und hierbei über den Klemmring die Arretierung zwischen Schaft und Rohrabschnitt sichergestellt.

Die Längeneinstellung ist stufenlos zwischen einer Minimallänge und einer Maximallänge des Drehmomentwerkzeugs möglich. Das Drehmomentwerkzeug bzw. dessen Feststellvorrichtung kommt mit nur wenigen Bauteilen aus, die konstruktiv einfach gestaltet und wenig störanfällig sind.

Beim Festlegen des Spannrings am Rohrabschnitt wird der Klemmring mit dem Schaft kraftschlüssig verspannt. Hierbei wird eine vom Spannring auf den Klemmring wirkende Axialkraft in eine radiale Spannkraft des Klemmrings umgesetzt. Damit der Klemmring sich unter dem Einfluss des Spannrings nicht verformt, wird der Klemmring am äußeren Umfang abgestützt.

Grundsätzlich kann die Abstützung des Klemmrings durch eine zweckentsprechende Gestaltung des Spannrings realisiert sein, beispielsweise durch einen Hülsenabschnitt am Innenumfang des Spannrings, welcher den Klemmring beim Verspannen übergreift und von außen abstützt. Hierdurch wird eine Verformung des Klemmrings beim Verspannen vermieden.

Der Klemmring wird durch einen Zwischenring abgestützt, der vom Spannring eingeschlossen wird. Der Innendurchmesser des Zwischenrings und der Außendurchmesser des auf dem Schaft geführten Klemmrings sind so aufeinander abgestimmt, dass der Zwischenring den Klemmring übergreift und am Außenumfang abstützt. Beim Spannvorgang wird der Zwischenring durch den Spannring auf den Klemmring geschoben, so dass eine zuverlässige äußere Abstützung des Klemmrings durch den Zwischenring gewährleistet ist.

Auf dem Schaft ist ein längsgeschlitzter Klemmring verlagerbar angeordnet, welcher unter dem Einfluss des Spannrings mit dem Schaft verspannbar ist. Beim Festlegen des Spannrings am Rohrabschnitt wird der Klemmring mit dem Schaft kraftschlüssig verspannt. Hierbei wird eine vom Spannring auf den Klemmring wirkende Axialkraft in eine radiale Spannkraft des Klemmrings umgesetzt. Damit der Klemmring sich unter dem Einfluss des Spannrings nicht verformt, wird der Klemmring am äußeren Umfang durch einen Zwischenring abgestützt, welcher den Klemmring umschließt.

In einer bevorzugten Ausführungsform ist zur Lageorientierung des Zwischenrings auf dem Klemmring am Klemmring ein Anschlag vorgesehen. Des Weiteren weist das erfindungsgemäße Drehmomentwerkzeug eine die Verlagerung des Schaftes im Rohrabschnitt begrenzende Ausziehsicherung auf. Hierdurch wird ein Endanschlag gebildet, welcher die maximale Ausziehlänge des Schaftes im Rohrabschnitt vorgibt und ein ungewolltes Herausziehen des Schaftes aus dem Rohrabschnitt verhindert.

Durch das Zusammenspiel des endseitig am Rohrabschnitt festlegbaren Spannrings und des auf dem Schaft verlagerbaren Klemmrings wird eine stufenlose Längenverstellung des Drehmomentwerkzeugs ermöglicht. Der mit dem Längsschlitz versehene Klemmring ist im Rohrabschnitt auf dem Schaft verlagerbar angeordnet. Endseitig am Rohrabschnitt ist der Spannring festlegbar. Bei der Feststellung des Spannrings am Rohrabschnitt wird der Klemmring unter dem Einfluss des Spannrings radial mit dem Schaft verspannt und der Schaft relativ gegenüber dem Rohrabschnitt arretiert.

Das derart gestaltete Drehmomentwerkzeug ermöglicht auf konstruktiv einfache und zuverlässig funktionierende Weise eine stufenlose Längenverstellung des Schafts im Rohrabschnitt. Zum Verstellen wird der Spannring gelöst. Der Schaft kann dann im Rohrabschnitt des Handwerkzeugs longitudinal verschoben und die gewünschte Länge des Drehmomentwerkzeugs eingestellt werden. Anschließend wird der Spannring festgelegt und hierbei über den Klemmring die Arretierung zwischen Schaft und Rohrabschnitt sichergestellt. Die zuverlässige Abstützung des Klemmrings durch den Zwischenring wird durch den Anschlag am Klemmring gewährleistet. Dieser vermeidet, dass der Zwischenring über den Klemmring rutschen kann und stellt sicher, dass der Klemmring sich beim Verspannen der Anordnung über dem Klemmring befindet und diesen umschließt.

Die Längeneinstellung ist stufenlos zwischen einer Minimallänge und einer Maximallänge des Drehmomentwerkzeugs möglich. Die Maximallänge des Drehmomentwerkzeugs wird begrenzt durch die erfindungsgemäß vorgesehene Ausziehsicherung, die auch ein ungewolltes Herausziehen des Schaftes aus dem Rohrabschnitt verhindert.

Das Drehmomentwerkzeug bzw. dessen Feststellvorrichtung kommt mit nur wenigen Bauteilen aus, die konstruktiv einfach gestaltet und wenig störanfällig sind.

Bei einer für die Praxis als besonders vorteilhaft angesehenen Ausführungsform umfasst die Ausziehsicherung einen in einer Querbohrung des Schafts unter Eingliederung einer Druckfeder angeordneten Arretierbolzen. Ferner ist am Innenumfang des Rohrabschnitts im Bereich des freien Endes des Rohrabschnitts eine Innennut vorgesehen. In der Innennut gelangt der Arretierbolzen bei Erreichen der maximalen Ausziehlänge des Schafts sperrend zum Eingriff.

Bei der Längeneinstellung des Drehmomentwerkzeugs wird der Schaft im Rohrabschnitt bewegt. Hierbei liegt der Arretierbolzen mit seiner Stirnseite unter dem Einfluss der Druckfeder am Innenumfang des Rohrabschnitts an. Sobald der Schaft soweit ausgezogen ist, dass der Arretierbolzen in den Bereich der Innennut gelangt, wird der Arretierbolzen durch die Druckfeder in die Innennut hineinbewegt und sperrt eine weitere Ausziehbewegung des Schafts gegenüber dem Rohrabschnitt. Die erfindungsgemäß vorgesehene Ausziehsicherung funktioniert zuverlässig und störunanfällig.

Die Innennut weist an ihrer zum Handgriff weisenden Seite eine umlaufende Gleitschräge auf. Die Gleitschräge stellt sicher, dass der Arretierbolzen beim Ineinanderschieben von Schaft und Rohrabschnitt gegen die Kraft der Druckfeder zurückverlagert wird, so dass ein problemloses Einschieben des Schafts im Rohrabschnitt gewährleistet ist. Zweckmäßigerweise läuft die Gleitschräge nach hinten zum Innenrohr unter einem Winkel von 20° aus.

Zur Sicherstellung der Klemmwirkung des Klemmrings ist dieser bei beiden Lösungen der Aufgabe geringfügig länger ausgeführt als der Zwischenring. Der Spannring drückt dann beim Spannvorgang in axialer Richtung endseitig auf den Klemmring, wodurch der Kraftschluss zwischen Klemmring und Schaft bewirkt wird.

Die Festlegung des Spannrings endseitig am Rohrabschnitt erfolgt vorteilhafterweise schraubtechnisch. Hierzu ist am Spannring ein Innengewinde vorgesehen, mit welchem der Spannring auf ein endseitig am Rohrabschnitt vorgesehenes Außengewinde aufschraubbar ist. Das Lösen bzw. Festziehen der Feststellvorrichtung erfolgt durch Verdrehen des Spannrings. Hierzu genügen wenige Umdrehungen, um die Feststellvorrichtung zu lösen, so dass der Schaft dann relativ zum Rohrabschnitt längs verschoben werden kann. Die Arretierung erfolgt dann in umgekehrter Weise, indem der Spannring am Rohrabschnitt festgezogen wird.

Besonders vorteilhaft sind am endseitigen Bereich des Schafts zwei Stützringe mit Abstand zueinander angeordnet. Hierdurch ist eine stabile Abstützung und Führung des Schafts im Rohrabschnitt des Handgriffs gewährleistet.

In der Praxis ist vorgesehen, dass der Spannring ebenso wie der bzw. die Stützringe aus Kunststoff bestehen, wohingegen als Zwischenring ein Metallring zum Einsatz gelangt. Diese Werkstoffe bzw. Werkstoffpaarungen bringen fertigungs- und anwendungstechnische sowie ökonomische Vorteile mit sich.

Um die Griffigkeit des Spannrings zu verbessern, ist dieser an seinem Außenumfang mit einer Profilierung, insbesondere eine rändelartigen Profilierung, versehen. Diese Maßnahme wirkt sich vorteilhaft für den praktischen Gebrauch aus, insbesondere bei der Betätigung mit feuchten oder öligen Händen.

Die Stützfunktion des Stützrings wird weiter verbessert, wenn diesem zusätzlich ein O-Ring aus einem gummielastischen Material zugeordnet ist. Der O-Ring übernimmt eine Pufferwirkung, so dass eine Stauchung des Stützrings bei einer Biegebelastung während der Montage vermieden bzw. reduziert werden kann.

Die Erfindung ist nachfolgend anhand zweier in den Zeichnungen dargestellten Ausführungsbeispielen näher beschrieben.

Es zeigen:
- Figur 1: eine Ausführungsvariante eines erfindungsgemäßen Drehmomentwerkzeugs mit ausgezogenem Schaft in der Draufsicht;
- Figur 2: in der Seitenansicht, teilweise im vertikalen Längsschnitt, das Drehmomentwerkzeug mit eingeschobenem Schaft;
- Figur 3: in vergrößertem Maßstab den Ausschnitt X der Figur 2;
- Figur 4: in vergrößertem Maßstab den Ausschnitt Y der Figur 2;
- Figur 5: in der Draufsicht den Handgriff mit Rohrabschnitt;
- Figur 6: in der Draufsicht den Werkzeugkopf mit Schaft;
- Figur 7: einen Klemmring in einem vertikalen Längsschnitt;
- Figur 8: den Klemmring in der Draufsicht;
- Figur 9: einen Zwischenring in einem vertikalen Längsschnitt und
- Figur 10: den Zwischenring in der Draufsicht.
- Figur 11: eine andere Ausführungsvariante eines erfindungsgemäßen Drehmomentwerkzeugs mit ausgezogenem Schaft in der Draufsicht;
- Figur 12: in der Seitenansicht, teilweise im vertikalen Längsschnitt, das Drehmomentwerkzeug mit eingeschobenem Schaft;
- Figur 13: in vergrößertem Maßstab den Ausschnitt X der Figur 12 bei ausgezogenem Schaft;
- Figur 14: in vergrößertem Maßstab den Ausschnitt Y der Figur 12 bei eingeschobenem Schaft;
- Figur 15: im Längsschnitt den Handgriff mit Rohrabschnitt;
- Figur 16: in der Draufsicht den Werkzeugkopf mit Schaft;
- Figur 17: einen Klemmring in einem Längsschnitt;
- Figur 18: den Klemmring in der Draufsicht;
- Figur 19: einen Zwischenring in einem Längsschnitt;
- Figur 20: den Zwischenring in der Draufsicht;
- Figur 21: einen Spannring in einem Längsschnitt und

- Figur 22: den Spannring in einer Ansicht.

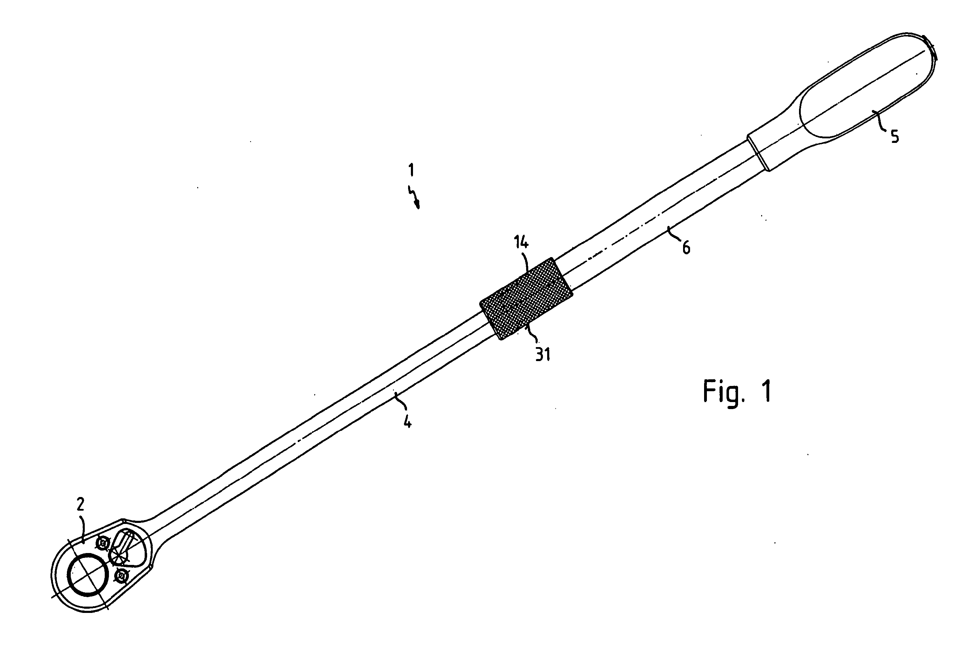

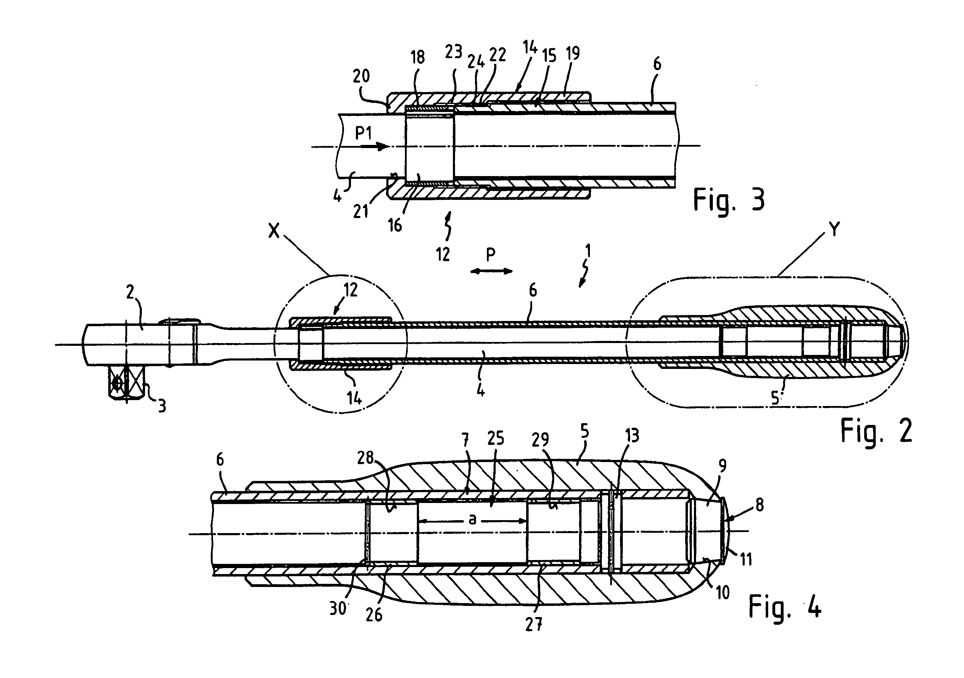

Die Figuren 1 und 2 zeigen gemäß der Lösung der Aufgabe ein erfindungsgemäßes teleskopierbares Drehmomentwerkzeug 1 in Form einer Knarre in zwei verschiedenen Betriebszuständen - nämlich bei ausgezogener Maximallänge (Figur 1) und einer eingeschobenen Minimallänge (Figur 2).

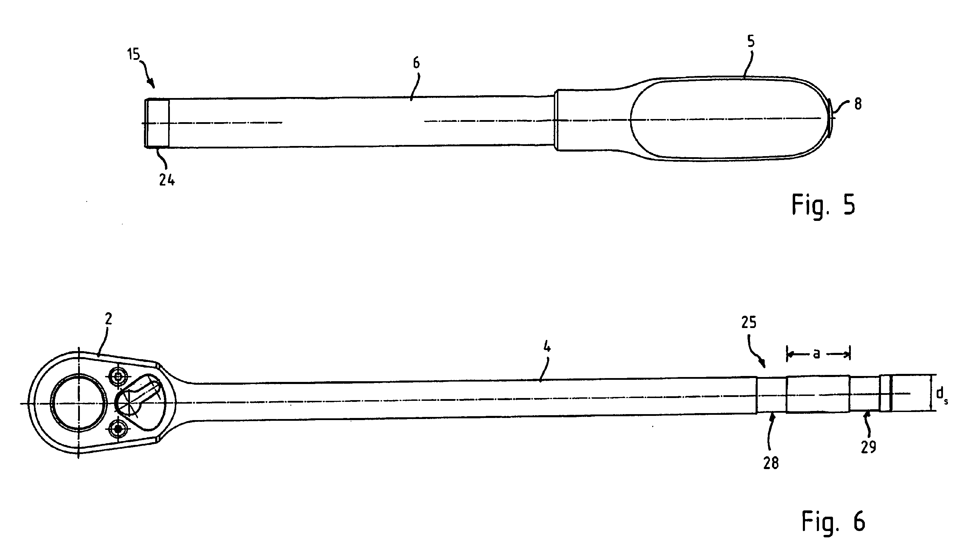

Das Drehmomentwerkzeug 1 weist einen Werkzeugkopf 2 mit einem Antriebszapfen 3 und einen mit dem Werkzeugkopf 2 verbundenen Schaft 4 sowie einen Handgriff 5 aus Kunststoff auf. Mit dem Handgriff 5 ist ein Rohrabschnitt 6 gekoppelt. Der Handgriff 5 ist auf ein Ende 7 des Rohrabschnitts 6 aufgeschoben und durch Presssitz fixiert, der durch einen Zweikomponentenkleber gesichert ist. Der Stopfen 8 durchsetzt mit seinem sich zum freien Ende hin leicht konisch verbreiternden Schaft 9 eine Ausnehmung 10 im Handgriff 5 und liegt mit dem flach ausgebildeten verbreiterten Kopfende 11 am Handgriff 5 an (siehe hierzu auch Figuren 4 und 5).

Der Schaft 4 ist im Rohrabschnitt 6 teleskopierbar längsverschieblich gelagert. Dies ist durch den Pfeil P verdeutlicht. Durch eine Feststelleinrichtung 12 kann der Schaft 4 relativ gegenüber dem Rohrabschnitt 6 arretiert werden. Auf diese Weise kann durch Verschieben des Schafts 4 im Rohrabschnitt 6 die Länge des Drehmomentwerkzeugs 1 eingestellt werden. Figur 1 zeigt das Drehmomentwerkzeug 1 mit ausgezogenem Schaft 4, wohingegen die Figur 2 das Drehmomentwerkzeug 1 mit eingeschobenem Schaft 4 darstellt. Zur Begrenzung der unteren Lage des Schafts 4 im Rohrabschnitt 6 ist ein Anschlagstift 13 vorgesehen, welcher den Rohrabschnitt 6 quer durchsetzt.

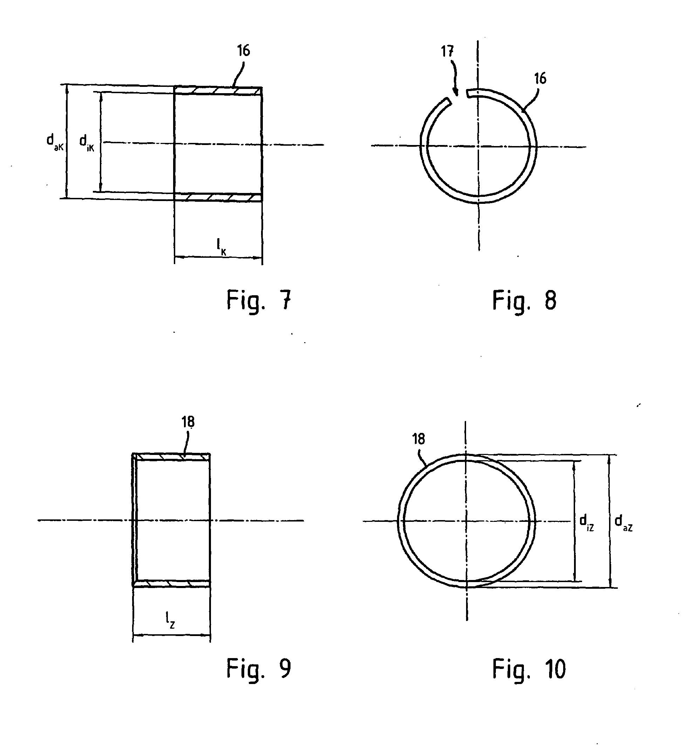

Die Feststellvorrichtung 12 umfasst einen Spannring 14 und einen auf dem Schaft 4 vor dem schaftseitigen Ende 15 des Rohrabschnitts 6 verlagerbar angeordneten Klemmring 16 aus Kunststoff. Der Innendurchmesser d_{iK} des Klemmrings 16 ist entsprechend auf den Durchmesser dₛ des Schafts 4 abgestimmt (siehe Figuren 6 und 7). Wie insbesondere auch die Figur 8 erkennen lässt, weist der Klemmring 16 einen Längsschlitz 17 auf. Des Weiteren ist ein Zwischenring 18 aus Metall vorgesehen, der innerhalb des Spannrings 14 gelagert und von diesem eingeschlossen ist. Der Zwischenring 18 übergreift den Klemmring 16 beim Spannvorgang und stützt diesen von außen ab. Anhand der Figuren 9 und 10 wird deutlich, dass der Zwischenring 18 in sich geschlossen ist.

Anhand der Figur 3 erkennt man, dass der Spannring 14 nach Art einer Überwurfmutter ausgeführt ist. Der Spannring 14 weist einen Hülsenabschnitt 19 mit einem Boden 20 auf, in dem eine Durchgangsöffnung 21 vorgesehen ist, durch die der Schaft 4 geführt ist. Am inneren Umfang des Hülsenabschnitts 19 ist ein Gewindeabschnitt 22 mit einem Innengewinde 23 vorgesehen. Mit dem Innengewinde 23 kann der Spannring 14 auf ein am schaftseitigen Ende 15 des Rohrabschnitts 6 vorgesehenes Außengewinde 24 aufgeschraubt werden. Die Betätigung der Feststellvorrichtung 12 erfolgt durch eine Drehbewegung des Spannrings 14. Zum Feststellen des Schafts 4 wird der Spannring 14 rechtsgängig auf das Außengewinde 24 des Rohrabschnitts 6 geschraubt. Das Lösen erfolgt durch eine umgekehrte linksgängige Drehbewegung des Spannrings 14.

Bei gelöster Feststelleinrichtung 12 kann der Schaft 4 im Rohrabschnitt 6 longitudinal bewegt und die gewünschte Länge und somit der wirksame Hebelarm des Drehmomentwerkzeugs 1 eingestellt werden. Nachdem die Länge eingestellt ist, wird der Schaft 4 arretiert. Dies erfolgt durch Festziehen des Spannrings 14 gegenüber dem Rohrabschnitt 6. Hierbei wird der Spannring 14 axial in Richtung des Pfeils P1 bewegt und der Klemmring 16 gegen das schaftseitige Ende 15 des Rohrabschnitts 6 gepresst, wodurch der Klemmring 16 mit dem Schaft 4 kraftschlüssig verspannt wird. Hierdurch wird der Schaft 4 in der gewünschten Position fixiert. Der Zwischenring 18 umgreift beim Spannvorgang den Klemmring 16, so dass der Klemmring 16 an seinem Außenumfang abgestützt ist. Hierdurch wird eine Verformung des Klemmrings 16 beim Spannvorgang vermieden. Hierzu sind der Innendurchmesser d_{iZ} des Zwischenrings 18 und der Außendurchmesser d_{aK} des Klemmrings 16 so aufeinander abgestimmt, dass der Zwischenring 18 den Klemmring 14 formschlüssig übergreifen kann.

In den Figuren 7 und 10 sind ferner der Innendurchmesser des Klemmrings 16 mit d_{iK} und der Außendurchmesser des Zwischenrings 18 mit d_{aZ} bezeichnet.

Man erkennt des Weiteren sowohl in der Figur 3 als auch anhand der Figuren 7 und 9, dass der Klemmring 16 eine Länge I_{K} aufweist, die etwas länger ist, als die Länge I_{Z} des Zwischenrings 18. Im Ausführungsbeispiel beträgt die Längendifferenz 2 mm. Diese Maßnahme stellt das Zusammenspiel zwischen Spannring 14 und Klemmring 16 zum Verspannen des Schafts 4 sicher, so dass die vom Spannring 14 ausgeübte Axialkraft in eine radiale Klemmkraft des Klemmrings 16 umgesetzt wird.

In der Figur 2 ebenso wie in der vergrößerten Darstellung der Figur 4 erkennt man, dass am im Rohrabschnitt 6 geführten endseitigen Abschnitt 25 des Schafts 4 zwei Stützringe 26, 27 vorgesehen sind. Die Stützringe 26, 27 bestehen aus Kunststoff und sind längsgeschlitzt. In axialer Richtung sind die Stützringe 26, 27 mit Abstand a zueinander angeordnet. Die Stützringe 26, 27 sind in Ringnuten 28, 29 (siehe Figur 6) des Schafts 4 lageorientiert und dienen zur Führung des Schafts 4 im Rohrabschnitt 6 sowie zur Abstützung des Schafts 4 im Rohrabschnitt 6 bei einer Biegebeanspruchung des Drehmomentwerkzeugs 1 unter Last.

Dem in Richtung zum Werkzeugkopf 2 des Schafts 4 gesehenen vorderen Stützring 26 ist ein O-Ring 30 zugeordnet. Dieser ist wie der Stützring 26 in der vorderen Ringnut 28 positioniert. Der O-Ring 30 definiert einen oberen Anschlag des Schafts 4 in der Maximallänge gegenüber dem Spannring 4 bzw. dem Klemmring 16 beim Ausziehen des Schafts 4. Des Weiteren verhindert der O-Ring 30, dass der Klemmring 16 bei ausgezogenem Schaft 4 über die Ringnut 28 rutschen kann.

Das erfindungsgemäße Drehmomentwerkzeug 1 ist in seiner Länge stufenlos zwischen der Minimallänge und der Maximallänge verstellbar. Die Arretierung kann in der jeweils gewünschten Längenposition auf einfache Weise durch den Spannring 14 und den Klemmring 16 erfolgen. Zur Verbesserung der Griffigkeit des Spannrings 14 ist dessen Außenfläche durch eine Riffelung 31 profiliert.

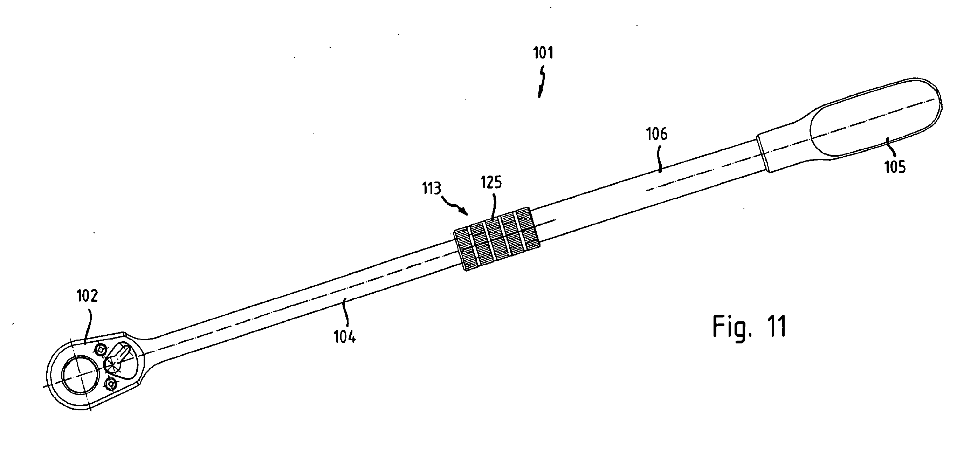

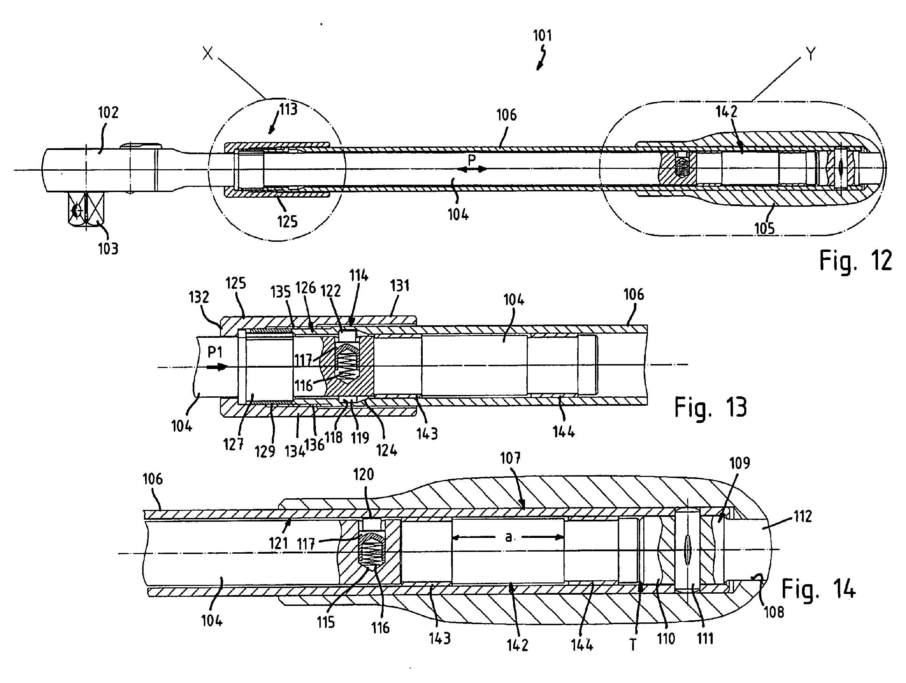

Die Figuren 11 und 12 zeigen gemäß der Lösung der Aufgabe eine zweite Ausführungsvariante eines erfindungsgemäßen teleskopierbaren Drehmomentwerkzeugs 101 in Form einer Knarre in zwei verschiedenen Betriebsstellungen - nämlich bei ausgezogener Maximallänge (Figur 11) und einer eingeschobenen Minimallänge (Figur 12).

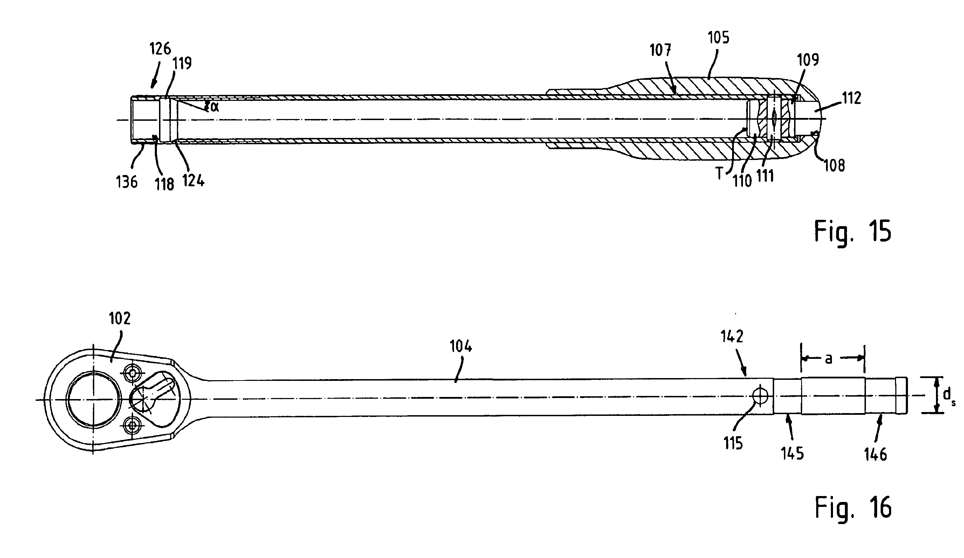

Das Drehmomentwerkzeug 101 weist einen Werkzeugkopf 102 mit einem Antriebszapfen 103 und einen mit dem Werkzeugkopf 102 verbundenen Schaft 104 sowie einen Handgriff 105 aus Kunststoff auf. Mit dem Handgriff 105 ist eine Rohrabschnitt 106 aus Metall gekoppelt (siehe auch Figuren 15 und 16). Der Handgriff 105 ist auf ein Ende 107 des Rohrabschnitts 106 aufgeschoben und durch Presssitz fixiert, der durch einen Zweikomponentenkleber gesichert ist. Aus montagetechnischen Gründen weist der Handgriff 105 endseitig eine Öffnung 108 auf. Diese wird beim Einführen des Rohrabschnitts 106 in den Handgriff 105 durch einen Stopfen 109 verschlossen, der im Ende 107 montiert ist. Der Stopfen 109 greift mit seinem Zylinderkörper 110 in das Ende 107 des Rohrabschnitts 106 ein und ist dort durch einen Stift 111 fixiert, der den Zylinderkörper 110 und den Rohrabschnitt 106 quer durchsetzt. Mit seinem über das Ende 107 vorstehenden Kopfende 112 verschließt der Stopfen 109 die Öffnung 108 im Handgriff 105. Der Stopfen 109 bildet mit seinem Zylinderkörper 110 einen Tiefenanschlag T für den Schaft 104 im Rohrabschnitt 106 (siehe hierzu insbesondere Figur 14).

Der Schaft 104 ist im Rohrabschnitt 106 teleskopierbar längsverschieblich gelagert. Dies ist durch den Pfeil P verdeutlicht. Durch eine Feststelleinrichtung 113 kann der Schaft 104 relativ gegenüber dem Rohrabschnitt 106 arretiert werden. Auf diese Weise kann durch Verschieben des Schafts 104 im Rohrabschnitt 106 die Länge des Drehmomentwerkzeugs 101 eingestellt werden. Figur 11 zeigt das Drehmomentwerkzeug 101 mit ausgezogenem Schaft 104, wohingegen die Figur 12 und auch die Figur 14 das Drehmomentwerkzeug 101 mit eingeschobenem Schaft 104 darstellt. Wie bereits erläutert, bildet der Stopfen 109 einen Tiefenanschlag T zur Begrenzung der unteren Lage des Schafts 104 im Rohrabschnitt 106.

Die obere Lage des Schafts 104 in der maximalen Ausziehlänge wird durch eine Ausziehsicherung 114 begrenzt. Die Ausziehsicherung 114 umfasst einen in einer Querbohrung 115 des Schafts 104 unter Eingliederung einer Druckfeder 116 angeordneten Arretierbolzen 117. Der Arretierbolzen 117 wirkt zur Begrenzung der maximalen Ausziehlänge des Schafts 104 im Rohrabschnitt 106 mit einer am Innenumfang 118 des Rohrabschnitts 106 vorgesehenen Innennut 119 zusammen (siehe hierzu insbesondere Figur 13).

Beim Ein- bzw. Ausziehen des Schafts 104 im Rohrabschnitt 106 ist der Arretierbolzen 117 nach innen in die Querbohrung 115 zurückverlagert und gleitet mit seiner Stirnfläche 120 an der Innenwand 121 des Rohrabschnitts 106 entlang. Dies zeigen die Figuren 12 und 14. Beim Ausziehen des Schafts 104 aus dem Rohrabschnitt 106 gelangt der Arretierbolzen 117 bei Erreichen der maximalen Ausziehlänge mit der Innennut 119 zur Deckung (Figur 13). Durch die Kraft der Druckfeder 116 wird der Arretierbolzen 117 aus der Querbohrung 115 herausbewegt und gelangt mit seinem Kopfende 122 in der Innennut 119 zum Eingriff, so dass eine weitere Ausziehbewegung des Schafts 104 gesperrt ist. Man erkennt ferner, dass die Innennut 119 auf ihrer zum Handgriff 105 weisenden Seite 123 eine Gleitschräge 124 aufweist. Die Gleitschräge 124 ermöglicht, dass der Arretierbolzen 117 zum Einschieben des Schafts 104 in den Rohrabschnitt 106 aus der Sperrstellung herausbewegt und in die Querbohrung 115 zurück gedrückt werden kann. Als für die Praxis vorteilhaft wird eine Gleitschräge 124 angesehen mit einem Winkel α von 20° nach hinten zur Innenwand 121 des Rohrabschnitts 106 hin auslaufend.

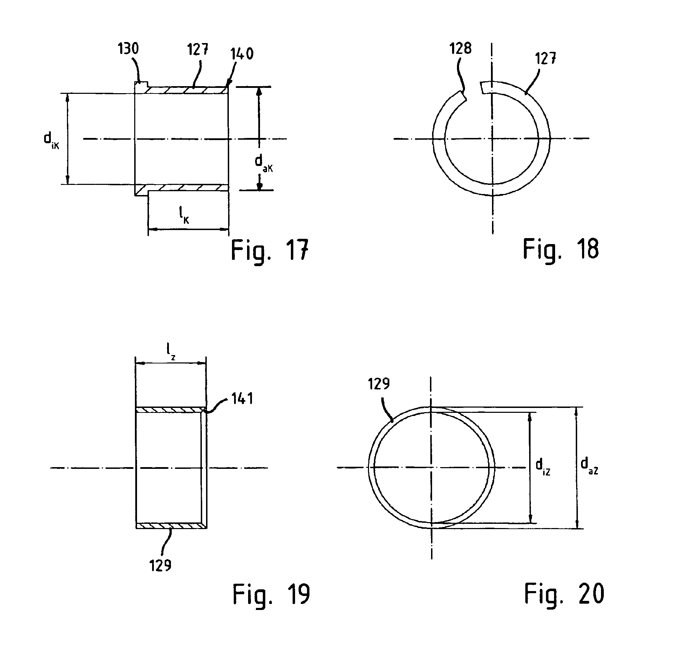

Die Feststellvorrichtung 113 umfasst einen Spannring 125 und einen auf dem Schaft 104 vor dem schaftseitigen Ende 126 des Rohrabschnitts 106 verlagerbar angeordneten Klemmring 127 aus Kunststoff. Der Innendurchmesser d_{iK} des Klemmrings 127 ist entsprechend auf den Durchmesser d_{S} des Schafts 104 abgestimmt (siehe hierzu Figuren 16 und 17). Wie insbesondere die Figur 18 erkennen lässt, weist der Klemmring 127 einen Längsschlitz 128 auf. Des Weiteren ist ein Zwischenring 129 aus Metall vorgesehen, der innerhalb des Spannrings 125 gelagert und von diesem eingeschlossen ist. Der Zwischenring 129 übergreift und umschließt den Klemmring 127 und stützt diesen von außen ab. Anhand der Figuren 19 und 20 wird deutlich, dass der Zwischenring 129 in sich geschlossen ist. Am Klemmring 127 ist ein Anschlag 130 in Form eines sich radial nach außen erstreckenden umlaufenden Bunds vorgesehen. Durch den Anschlag 130 wird der Zwischenring 129 auf dem Klemmring 127 lageorientiert und ein Überrutschen des Zwischenrings 129 zwischen Spannring 125 und Klemmring 127 verhindert.

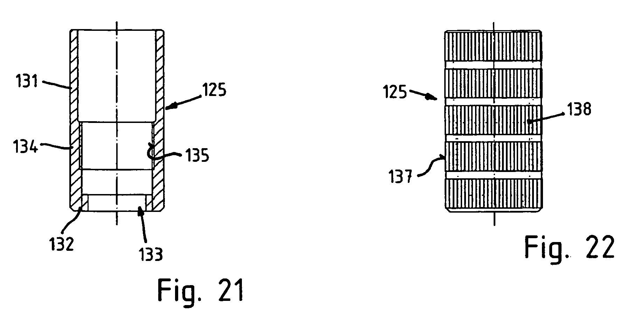

Anhand der Figuren 13 und 21 erkennt man, dass der Spannring 125 nach Art einer Überwurfmutter ausgeführt ist. Der Spannring 125 weist einen Hülsenabschnitt 131 mit einem Boden 132 auf, in dem eine Durchgangsöffnung 133 vorgesehen ist, durch die der Schaft 104 geführt ist. Am inneren Umfang des Hülsenabschnitts 131 ist ein Gewindeabschnitt 134 mit einem Innengewinde 135 vorgesehen. Mit dem Innengewinde 135 kann der Spannring 125 auf ein am schaftseitigen Ende 126 des Rohrabschnitts 6 vorgesehenes Außengewinde 136 (Figur 15) aufgeschraubt werden. Die Betätigung der Feststellvorrichtung 113 erfolgt durch eine Drehbewegung des Spannrings 125. Zum Feststellen des Schafts 104 wird der Spannring 125 rechtsgängig auf das Außengewinde 136 des Rohrabschnitts 106 geschraubt. Das Lösen erfolgt durch eine umgekehrte, linksgängige Drehbewegung des Spannrings 125.

Am Außenumfang 137 ist der Spannring 125 mit einer Profilierung 138 in Form einer Rändelung versehen (Figur 22). Diese Maßnahme verbessert die Griffigkeit des Spannrings 125, was insbesondere beim Betätigen mit feuchten oder öligen Händen vorteilhaft ist.

Bei gelöster Feststelleinrichtung 113 kann der Schaft 104 im Rohrabschnitt 106 longitudinal bewegt und die gewünschte Länge und damit der wirksame Hebel des Drehmomentwerkzeugs 101 eingestellt werden. Nachdem die Länge eingestellt ist, wird der Schaft 104 arretiert. Dies erfolgt durch Festziehen des Spannrings 125 gegenüber dem Rohrabschnitt 106. Hierbei wird der Spannring 125 axial in Richtung des Pfeils P1 bewegt und der Klemmring 127 gegen das schaftseitige Ende 126 des Rohrabschnitts 106 gepresst, wodurch der Klemmring 127 mit dem Schaft 104 kraftschlüssig verspannt wird. Auf diese Weise wird der Schaft 104 in der gewünschten Position fixiert. Der Zwischenring 129 umgreift beim Spannvorgang den Klemmring 127, so dass der Klemmring 127 an seinem Außenumfang 139 abgestützt ist. Hierdurch wird eine Verformung des Klemmrings 127 beim Spannvorgang vermieden. Hierzu sind der Innendurchmesser d_{iZ} des Zwischenrings 129 und der Außendurchmesser d_{aK} des Klemmrings 127 so aufeinander abgestimmt, dass der Zwischenring 129 den Klemmring 127 formschlüssig übergreift.

In den Figuren 17 und 20 sind ferner der Innendurchmesser des Klemmrings 127 mit d_{iK} und der Außendurchmesser des Zwischenrings 129 mit d_{aZ} bezeichnet.

Man erkennt des Weiteren sowohl in der Figur 13 als auch anhand der Figuren 17 und 119, dass der Klemmring 127 eine Länge I_{K} gemessen vom Anschlag 130 bis zum gegenüber liegenden Ende 140 aufweist, die etwas länger ist als die Länge I_{Z} des Zwischenrings 129. Im Ausführungsbeispiel beträgt die Längendifferenz 2 mm. Diese Maßnahme stellt das Zusammenspiel zwischen Spannring 125 und Klemmring 127 zum Verspannen des Schafts 104 sicher, so dass die vom Spannring 125 ausgeübte Axialkraft in eine radiale Klemmkraft des Klemmrings 127 umgesetzt wird. Ferner ist am Zwischenring 129 am Ende 140 eine Fase 141 vorgesehen.

In der Figur 12 ebenso wie in der vergrößerten Darstellung der Figur 14 erkennt man, dass am im Rohrabschnitt 106 geführten endseitigen Abschnitt 142 des Schafts 104 zwei Stützringe 143, 144 vorgesehen sind. Die Stützringe 143, 144 bestehen aus Kunststoff und sind längsgeschlitzt. In axialer Richtung sind die Stützringe 143, 144 mit Abstand a zueinander angeordnet. Die Stützringe 143, 144 sind in Ringnuten 145, 146 (siehe auch Figur 16) des Schafts 104 lageorientiert und dienen zur Führung des Schafts 104 im Rohrabschnitt 106 sowie zur Abstützung des Schafts 104 im Rohrabschnitt 106 bei einer Biegebeanspruchung des Drehmomentwerkzeugs 101 unter Last.

Das erfindungsgemäße Drehmomentwerkzeug 101 ist in seiner Länge stufenlos zwischen der Minimallänge und der Maximallänge verstellbar. Die Arretierung kann in der jeweils gewünschten Längenposition auf einfache Weise durch die Feststelleinrichtung 113 mittels Spannring 125 und Klemmring 127 erfolgen.

### Bezugszeichen:

- 1 -: Drehmomentwerkzeug
- 2 -: Werkzeugkopf
- 3 -: Antriebszapfen
- 4 -: Schaft
- 5 -: Handgriff
- 6 -: Rohrabschnitt
- 7 -: Ende v. 6
- 8 -: Stopfen
- 9 -: Schaft v. 8
- 10 -: Ausnehmung
- 11 -: Kopfende v. 8
- 12 -: Feststelleinrichtung
- 13 -: Anschlagstift
- 14 -: Spannring
- 15 -: schaftseitiges Ende v. 6
- 16 -: Klemmring
- 17 -: Längsschlitz
- 18 -: Zwischenring
- 19 -: Hülsenabschnitt
- 20 -: Boden
- 21 -: Durchgangsöffnung
- 22 -: Gewindeabschnitt
- 23 -: Innengewinde
- 24 -: Außengewinde
- 25 -: Abschnitt v. 4
- 26 -: Stützring
- 27 -: Stützring
- 28 -: Ringnut
- 29 -: Ringnut
- 30 -: O-Ring
- 31 -: Riffelung

- 101 -: Drehmomentwerkzeug
- 102 -: Werkzeugkopf
- 103 -: Antriebszapfen
- 104 -: Schaft
- 105 -: Handgriff
- 106 -: Rohrabschnitt
- 107 -: Ende v. 106
- 108 -: Öffnung
- 109 -: Stopfen
- 110 -: Zylinderkörper
- 111 -: Stift
- 112 -: Kopfende v. 109
- 113 -: Feststelleinrichtung
- 114 -: Ausziehsicherung
- 115 -: Querbohrung
- 116 -: Druckfeder
- 117 -: Arretierbolzen
- 118 -: Innenumfang v. 106
- 119 -: Innennut
- 120 -: Stirnfläche v. 117
- 121 -: Innenwand v. 106
- 122 -: Kopfende v. 117
- 123 -: Seite v. 119
- 124 -: Gleitschräge
- 125 -: Spannring
- 126 -: Ende v. 106
- 127 -: Klemmring
- 128 -: Längsschlitz
- 129 -: Zwischenring
- 130 -: Anschlag
- 131 -: Hülsenabschnitt
- 132 -: Boden v. 125
- 133 -: Durchgangsöffnung
- 134 -: Gewindeabschnitt
- 135 -: Innengewinde
- 136 -: Außengewinde
- 137 -: Außenumfang v. 125
- 138 -: Profilierung
- 139 -: Außenumfang v. 127
- 140 -: Ende v. 127
- 141 -: Fase
- 142 -: Abschnitt v. 104
- 143 -: Stützring
- 144 -: Stützring
- 145 -: Ringnut
- 146 -: Ringnut

- a -: Abstand
- d_{aK} -: Außendurchmesser v. 16, 127
- d_{aZ} -: Außendurchmesser v. 18, 129
- d_{iK} -: Innendurchmesser v. 16, 127
- d_{iZ} -: Innendurchmesser v. 18, 129
- d_{S} -: Durchmesser v. 4, 104
- I_{K} -: Länge v. 16, 127
- I_{Z} -: Länge v. 18, 129
- P -: Pfeil
- P1 -: Pfeil
- T -: Tiefenanschlag
- α -: Winkel

## Patentansprüche

1. Drehmomentwerkzeug, insbesondere Knarre oder Drehmomentschlüssel, mit einem Werkzeugkopf (2, 102), einem mit dem Werkzeugkopf (2, 102) verbundenen Schaft (4, 104) und einem Handgriff (5, 105), wobei der Schaft (4, 104) in einem mit dem Handgriff (5, 105) gekoppelten Rohrabschnitt (6, 106) teleskopierbar gelagert und durch einen Spannring (14, 125) arretierbar ist, wobei auf dem Schaft (4, 104) vor dem Ende (15, 126) des Rohrabschnitts (6, 106) ein mit einem Längsschlitz (17, 128) versehener Klemmring (16, 127) verlagerbar angeordnet und der Spannring (14, 125) endseitig am Rohrabschnitt (6, 106) festlegbar ist, und wobei der Klemmring (16, 127) unter dem Einfluss des Spannrings (14, 125) mit dem Schaft (4, 104) verspannbar ist, **dadurch gekennzeichnet, dass** am im Rohrabschnitt (6, 106) geführten endseitigen Abschnitt (25, 142) des Schafts (4, 104) zumindest ein Stützring (26, 27; 143, 144) lageorientiert angeordnet ist, der in einer Ringnut (28, 29: 145, 146) des Schaftes (4, 104) angeordnet ist und dass der Klemmring (16, 127) durch einen vom Spannring (14, 125) eingeschlossenen Zwischenring (18, 129) abgestützt ist, wobei der Klemmring (16, 127) länger ist als der Zwischenring (18, 129) und der Innendurchmesser d _{iz} des Zwischenrings (18, 129) und der Außendurchmesser d ₐₖ des Klemmrings (16, 127) so aufeinander abgestimmt, dass der Zwischenring (18, 129) den Klemmring (16, 127) übergreift, formschlüssig wobei der Spannring (14, 125) beim Spannvorgang in axialer Richtung endseitig auf den Klemmring (16, 127) drückt.

2. Drehmomentwerkzeug nach Anspruch 1, **dadurch gekennzeichnet, dass** der Klemmring (127) einen Anschlag (130) zur Lageorientierung des Zwischenrings (129) aufweist sowie eine die Verlagerung des Schafts (104) im Rohrabschnitt (106) begrenzende Ausziehsicherung (114) vorgesehen ist.

3. Drehmomentwerkzeug nach Anspruch 2, **dadurch gekennzeichnet, dass** die Ausziehsicherung (114) einen in einer Querbohrung (115) des Schafts (104) unter Eingliederung einer Druckfeder (116) angeordneten Arretierbolzen (117) umfasst und am Innenumfang (118) des Rohrabschnitts (106) eine Innennut (119) vorgesehen ist, in welcher der Arretierbolzen (117) zur Begrenzung der maximalen Ausziehlänge des Schafts (104) sperrend zum Eingriff gelangt.

4. Drehmomentwerkzeug nach Anspruch 3, **dadurch gekennzeichnet, dass** die Innennut (119) handgriffseitig eine umlaufende Gleitschräge (124) aufweist.

5. Drehmomentwerkzeug nach wenigstens einem der Ansprüche 1 bis 4, **dadurch gekennzeichnet, dass** der Spannring (14; 125) mit einem Innengewinde (23; 135) auf ein endseitig am Rohrabschnitt (6; 106) vorgesehenes Außengewinde (24, 136) aufschraubbar ist.

6. Drehmomentwerkzeug nach einem der Ansprüche 1 bis 5, **dadurch gekennzeichnet, dass** der Stützring (26, 27; 143, 144) längsgeschlitzt ist.

7. Drehmomentwerkzeug nach einem der Ansprüche 1 bis 6, **dadurch gekennzeichnet, dass** zwei Stützringe (26, 27; 143, 144) mit Abstand (a) zueinander vorgesehen sind.

8. Drehmomentwerkzeug nach einem der Ansprüche 1 bis 7, **dadurch gekennzeichnet, dass** der Klemmring (16; 127) sowie der oder jeder Stützring (26, 27; 143, 144) aus Kunststoff und der Zwischenring (18; 129) aus Metall bestehen.

9. Drehmomentwerkzeug nach wenigstens einem der Ansprüche 1 bis 8 und 10, **dadurch gekennzeichnet, dass** der Spannring (14; 125) an seinem Außenumfang eine Profilierung (38; 138) aufweist.

10. Drehmomentwerkzeug nach Anspruch 1, **dadurch gekennzeichnet, dass** dem Stützring (26) ein O-Ring (30) zugeordnet ist.

## Claims

1. Torque tool, especially a ratchet or a torque wrench, with a tool head (2, 102), a shaft (4, 104) connected with the tool head (2, 102) and a handle (5, 105), whereby the shaft (4, 104) fits telescopically into a pipe section (6, 106) coupled with the handle (5, 105) and is arrestable by a tension ring (14, 125), whereby a clamping ring (16, 127) provided with a longitudinal slot (17, 128) is displaceably arranged on the shaft (4, 104) before the end (15, 126) of the pipe section (6, 106) and the tension ring (14, 125) can be fixed to the end of the pipe section (6, 106), and whereby the clamping ring (16, 127) can be tensioned with the shaft (4, 104) under the effect of the tension ring (14, 125), **characterised in that** at least one support ring (26, 27; 143, 144) is arranged correctly aligned on the end section (25, 142) of the shaft (4, 104) which is guided in the pipe section (6, 106), said support ring being arranged in a ring groove (28, 29; 145, 146) of the shaft (4, 104) and that the clamping ring (16, 127) is supported by an intermediate ring (18, 129) enclosed by the tension ring (14, 125), the clamping ring (16, 127) being longer than the intermediate ring (18, 129) and the inner diameter d_{iz} of the intermediate ring (18, 129) and the outer diameter dₐₖ of the clamping ring (16, 127) are co-ordinated with each other in such a way that the intermediate ring (18, 129) overlaps the clamping ring (16, 127) with positive fit, while the tension ring (14, 125), during the tensioning process, presses in axial direction on the end of the clamping ring (16, 127).

2. Torque tool according to claim 1, **characterised in that** the clamping ring (127) has a stop (130) for the correct alignment of the intermediate ring (129) and a pull-out protection (114) limiting the displacement of the shaft (104) in the pipe section (106) is provided.

3. Torque tool according to claim 2, **characterised in that** the pull-out protection (114) comprises a locking bolt (117) arranged in a transverse hole (115) of the shaft (104) and integrating a pressure spring (116), and that on the inner perimeter (118) of the pipe section (106), an inner groove (119) is provided in which the locking bolt (117) comes to engage so as to lock, in order to limit the maximum pull-out length of the shaft (104).

4. Torque tool according to claim 3, **characterised in that** the inner groove (119) has a peripheral sliding bevel (124) on the handle side.

5. Torque tool according to at least one of claims 1 to 4, **characterised in that** the tension ring (14; 125) can be screwed by means of an internal screw thread (23; 135) onto an external screw thread (24, 136) provided on the end of the pipe section (6; 106).

6. Torque tool according to one of claims 1 to 5, **characterised in that** the support ring (26, 27; 143, 144) is longitudinally slotted.

7. Torque tool according to one of claims 1 to 6, **characterised in that** two support rings (26, 27; 143, 144) are provided at a distance (a) from each other.

8. Torque tool according to one of claim 1 to 7, **characterised in that** the clamping ring (16; 127) and one or both support rings (26, 27; 143, 144) are made of plastic and the intermediate ring (18; 129) is made of metal.

9. Torque tool according to at least one of claims 1 to 8 and 10, **characterised in that** the tension ring (14; 125) has a profile (38; 138) on its external perimeter.

10. Torque tool according to claim 1, **characterised in that** an O-ring (30) is assigned to the support ring (26).

## Revendications

1. Outil dynamométrique, en particulier clé à cliquet ou clé dynamométrique, comprenant une tête d'outil (2, 102), une tige (4, 104) reliée à la tête d'outil (2, 102) et une poignée (5, 105), dans lequel la tige (4, 104) est montée de façon télescopique dans un tronçon de tube (6, 106) couplé à la poignée (5, 105) et est susceptible d'être arrêtée par une bague de serrage (14, 125), dans lequel une bague de coincement (16, 127), pourvue d'une fente longitudinale (17, 128), est agencée de façon déplaçable sur la tige (4, 104) depuis l'extrémité (15, 126) du tronçon de tube (6, 106) et la bague de serrage (14, 125) est susceptible d'être immobilisée du côté terminal sur le tronçon de tube (6, 106), et dans lequel la bague de coincement (16, 127) est susceptible d'être serrée avec la tige (4, 104) sous l'influence de la bague de serrage (14, 125), **caractérisé en ce que** sur un tronçon terminal (25, 142), guidé dans le tronçon de tube (6, 106), de la tige (4, 104) est agencée au moins une bague de soutien (26, 27 ; 143, 144) de manière orientée en position, laquelle est agencée dans une gorge annulaire (28, 29 ; 145, 146) de la tige (4, 104), et **en ce que** la bague de coincement (16, 127) est soutenue par une bague intermédiaire (18, 129) enfermée par la bague de serrage (14, 125), dans lequel la bague de coincement (16, 127) est plus longue que la bague intermédiaire (18, 129) et le diamètre intérieur d_{iz} de la bague intermédiaire (18, 129) et le diamètre extérieur dₐₖ de la bague de coincement (16, 127) sont accordés l'un à l'autre de telle façon que la bague intermédiaire (18, 129) coiffe la bague de coincement (16, 127) à coopération de formes, et dans lequel la bague de serrage (14, 125) pousse, lors du processus de serrage, en direction axiale du côté terminal sur la bague de coincement (16, 127).

2. Outil dynamométrique selon la revendication 1, **caractérisé en ce que** la bague de coincement (127) comporte une butée (130) pour l'orientation en position de la bague intermédiaire (129), et **en ce qu'**il est prévu un blocage anti-extraction (114) qui limite le déplacement de la tige (104) dans le tronçon de tube (106).

3. Outil dynamométrique selon la revendication 2, **caractérisé en ce que** le blocage anti-extraction (114) comprend un goujon d'arrêt (117) agencé dans un perçage transversal (115) de la tige (104) en intégrant un ressort de compression (116), et **en ce qu'**il est prévu à la périphérie intérieure (118) du tronçon de tube (106) une gorge intérieure (119) dans laquelle le goujon d'arrêt (117) vient s'engager avec effet de blocage pour limiter la longueur d'extraction maximale de la tige (104).

4. Outil dynamométrique selon la revendication 3, **caractérisé en ce que** la gorge intérieure (119) comporte une pente de coulissement périphérique (124) du côté de la poignée.

5. Outil dynamométrique selon l'une au moins des revendications 1 à 4, **caractérisé en ce que** la bague de serrage (14 ; 125) est susceptible d'être vissée avec un taraudage (23 ; 135) sur un filetage (24, 136) prévu du côté terminal sur le tronçon de tube (6 ; 106).

6. Outil dynamométrique selon l'une des revendications 1 à 5, **caractérisé en ce que** la bague de soutien (26, 27 ; 143, 144) est fendue en longueur.

7. Outil dynamométrique selon l'une des revendications 1 à 6, **caractérisé en ce qu'**il est prévu deux bagues de soutien (26, 27 ; 143, 144) avec une distance (a) l'une par rapport à l'autre.

8. Outil dynamométrique selon l'une des revendications 1 à 7, **caractérisé en ce que** la bague de coincement (16 ; 127) ainsi que la bague de soutien ou chaque bague de soutien (26, 27 ; 143, 144) sont en matière plastique et la bague intermédiaire (18 ; 129) est en métal.

9. Outil dynamométrique selon l'une au moins des revendications 1 à 8, **caractérisé en ce que** la bague de serrage (14 ; 125) présente un profilage à sa périphérie extérieure.

10. Outil dynamométrique selon la revendication 1, **caractérisé en ce qu'**un joint torique (30) est associé à la bague de soutien (26).
